# EUROPÄISCHE PATENTANMELDUNG

(11) **EP 4 817 417 A1**
(43) Veröffentlichungstag der Anmeldung: **07.10.2026**
(21) Anmeldenummer: 26167965.8
(22) Anmeldetag: 26.03.2026
(51) Int. Cl.: A01M 29/32, E04D 13/00

(54) **SPERRVORRICHTUNG ZUR ABWEHR VON TIEREN, VORZUGSWEISE VÖGELN**

(30) Priorität: 31.03.2025 DE 102025001148
(71) Anmelder: Ziwi Vertriebs GmbH, 71334 Waiblingen (DE)
(72) Erfinder: Miskale, Pavol, 70736 Fellbach (DE)
(74) Vertreter: Patentanwälte Jackisch-Kohl und Kohl

(57) **Zusammenfassung**

Die Sperrvorrichtung dient zur Abwehr von Tieren, vorzugsweise Vögeln, insbesondere Tauben. Sie weist eine Mehrzahl parallel in einer Reihe nebeneinander angeordneter Halteteile (3) für Sperrelemente (6) auf, die relativ zum jeweiligen Halteteil (3) verstellbar sind. Um mit einer solchen Sperrvorrichtung bei einfacher und kostengünstiger Herstellung einen optimalen Sperrschutz sicherstellen, ist an wenigstens zwei Sperrelementen (6) eine quer dazu verlaufende Stabilisierungseinrichtung (3) vorgesehen, die die Sperrelemente (6) miteinander verbindet.

## Beschreibung

Die Erfindung betrifft eine Sperrvorrichtung zur Abwehr von Tieren, vorzugsweise von Vögeln, insbesondere von Tauben, nach dem Oberbegriff des Anspruches 1.

Auf Dächern von Gebäuden werden immer häufiger Solar- oder Photovoltaikmodule montiert. Zwischen den Modulen und dem Gebäudedach werden Zwischenräume gebildet, die von Vögeln dazu genutzt werden, sich dort niederzulassen bzw. dort zu nisten. Um den Zutritt der Vögel zu diesem Zwischenraum zu versperren, sind Sperrvorrichtungen bekannt, die mit Abstand nebeneinander liegende Sperrelemente aufweisen, die den Zugang zum Zwischenraum versperren. Die Sperrelemente sitzen auf einem stiftförmigen Halteteil, der an einem quer zu ihnen verlaufenden Befestigungsteil gehalten ist, mit dem die Sperrvorrichtung am Modul in geeigneter Weise befestigt wird. Auf den stiftförmigen Halteteilen sitzen die Sperrelemente in Form von Hülsen, die längs der stiftförmigen Halteteile so weit verschoben werden können, dass sie auf dem Dach aufliegen.

Der Erfindung liegt die Aufgabe zugrunde, eine solche Sperrvorrichtung so weiterzubilden, dass sie bei einfacher und kostengünstiger Herstellung einen optimalen Sperrschutz sicherstellt.

Diese Aufgabe wird bei der gattungsgemäßen Sperrvorrichtung erfindungsgemäß mit den kennzeichnenden Merkmalen des Anspruches 1 gelöst.

Die erfindungsgemäße Sperrvorrichtung hat eine Mehrzahl an parallel in einer Reihe nebeneinander angeordneten Halteteilen für darin gehalterte Sperrelemente. Die Sperrelemente sind relativ zum jeweiligen Halteteil verstellbar. Die Sperrvorrichtung kann zum Beispiel mindestens einen Träger umfassen, der wenigstens einen Befestigungsteil und sich quer zu ihm erstreckende Halteteile für die Sperrelemente aufweist.

Erfindungsgemäß ist an wenigstens zwei oder drei Sperrelementen eine quer dazu und parallel zu einem evtl. Befestigungsteil verlaufende Stabilisierungseinrichtung vorgesehen. Die Stabilisierungseinrichtung verbindet die nebeneinander liegenden Sperrelemente miteinander jeweils an ihrem frei ausfahrbaren bzw. ausgefahrenen Abschnitt und außerhalb bzw. jenseits der Halteteile und des evtl. Befestigungsteiles. Sie verhindert, dass sich insbesondere voll ausgefahrene Sperrelemente verbiegen und damit ein zu großer Abstand zu benachbarten Sperrelementen entsteht. Auch bei voll ausgefahrenen Sperrelementen behält die Sperrvorrichtung dadurch zuverlässig ihre Sperrwirkung bei, selbst wenn ungünstige Verhältnisse auf sie einwirken, wie unvorsichtige Montage oder Schnee- und Eisdruck.

Die Stabilisierungseinrichtung ist an den Sperrelementen verschiebbar angebracht. Sie lässt sich auf den Sperrelementen grundsätzlich zwischen den Halteteilen der Sperrelemente und deren von den Halteteilen abgewandten freien Enden frei verschieben, insbesondere in diejenige Stellung, in der die freien Enden der Sperrelemente von den Halteelementen am weitesten entfernt sind. Dort kann die Stabilisierungseinrichtung die maximale Stabilisierungswirkung erzielen. Ist die Stabilisierungseinrichtung an den Sperrelementen lose verschiebbar angebracht, kann sie durch Schwerkraftwirkung in die entfernte Position gelangen, womit dafür kein separater Handhabungsschritt erforderlich ist.

Die verschiebbare Anbindung der Stabilisierungseinrichtung an den Sperrelementen erlaubt, dass sich jedes Sperrelement gegenüber seinem jeweiligen Halteteil weiterhin individuell und unabhängig von den anderen Sperrelementen verschieben lässt. Damit können sich die Sperrelemente der jeweiligen Topografie ihres Montageortes anpassen, ohne dass ihre Sperrwirkung durch die Stabilisierungseinrichtung beeinträchtigt wäre.

Grundsätzlich kann die Stabilisierungseinrichtung an den Sperrelementen auf nahezu jede beliebige Weise angebracht sein, beispielsweise durch Klipsen, Klemmen oder Rödeln. Eine besonders einfache und kostengünstige Fertigung der Stabilisierungseinrichtung ergibt sich, wenn die Sperrelemente die Stabilisierungseinrichtung an Durchtrittsöffnungen in der Stabilisierungseinrichtung durchdringen. Die Stabilisierungseinrichtung kann dazu bandförmig ausgestaltet und die Durchtrittsöffnungen können durch Bohren oder Stanzen in der Stabilisierungseinrichtung ausgebildet sein.

Je mehr nebeneinanderliegende Sperrelemente die leisten- oder bandförmige Stabilisierungseinrichtung durchdringen, umso zuverlässiger kann die Stabilisierungseinrichtung stabilisierend wirken. Nach einer besonders wirksamen Ausgestaltungsform kann jedes Sperrelement die Stabilisierungseinrichtung mindestens zweimal durchdringen. Die Stabilisierungseinrichtung kann also mindestens zwei Durchtrittsöffnungen je Sperrelement aufweisen. Denn je mehr Kontaktpunkte oder Durchdringungsmöglichkeiten die Stabilisierungseinrichtung an ihren Durchtrittsöffnungen bietet, umso stabiler kann sie mit den Sperrelementen verbunden sein.

Eine besonders einfache Ausführung mit mehreren Durchdringungen je Sperrelement ergibt sich, wenn die Stabilisierungseinrichtung einen u-förmigen Querschnitt und zwei U-Schenkel hat, die zusammen für jedes Sperrelement zwei einander gegenüberliegende Durchtrittsöffnungen haben. Der u-förmige Querschnitt verleiht der Stabilisierungseinrichtung selbst bereits eine hohe Eigenstabilität. Mit den zwei einander gegenüberliegenden Durchtrittsöffnungen je Sperrelement kann eine spielarme Verbindung zwischen der Stabilisierungseinrichtung und den Sperrelementen erzeugt werden.

Alternativ kann die Stabilisierungseinrichtung einen band- oder leistenförmigen Verbindungsteil umfassen, von dem zungenförmige Laschen quer, vorzugsweise senkrecht abstehen. Die Laschen liegen einander bezüglich des Verbindungsteiles an dessen Längsrändern paarweise gegenüber. Sie haben jeweils Durchtrittsöffnungen, die mit der gegenüberliegenden Durchtrittsöffnung fluchten. Die Durchtrittsöffnungen haben vorteilhaft den gleichen Öffnungsquerschnitt wie die Durchtrittsöffnungen in den Halteteilen. Die Stabilisierungseinrichtung dieser Ausführungsform lässt sich materialsparend und einfach herstellen und hat ein geringes Gewicht.

Insbesondere in der Montagesituation ist es wünschenswert, dass die Stabilisierungseinrichtung ihre Verbindung mit den Sperrelementen nicht verliert, beispielsweise nicht von den Sperrelementen abrutscht. Nach einer vorteilhaften Ausführung hat daher wenigstens ein Sperrelement an seinem vom Halteteil abgewandten freien Ende einen Anschlagteil. Der Anschlagteil hat einen derartigen Querschnitt, dass er nicht durch die Durchtrittsöffnungen der Stabilisierungseinrichtung hindurch passt. Der Querschnitt des Anschlagteiles ist dazu in mindestens in einer Richtung größer als der Querschnitt des Sperrelementes.

Der Anschlagteil kann beispielhaft durch einen Querstift gebildet sein, der am freien Ende des Sperrelementes vorgesehen ist und es so durchsetzt, dass es zumindest mit einem Ende über das Sperrelement quer vorsteht.

Eine besonders einfache und kostengünstige Fertigung ergibt sich, wenn der Anschlagteil durch einen verformten Endabschnitt des Sperrelementes gebildet ist, beispielsweise durch ein Abbiegen des Endabschnittes oder durch Deformieren seines Querschnittes. Ein solcher verformter Endabschnitt lässt sich einfach am Sperrelement vorsehen. Insbesondere ist es nicht erforderlich, am Sperrelement zur Bildung des Anschlagteiles ein zusätzliches Bauteil anzubringen.

Die Halteteile der Sperrelemente können beispielsweise einstückig mit einem sie verbindenden Befestigungsteil ausgebildet sein und mit diesem in einer gemeinsamen Ebene liegen.

Die Länge der Sperrelemente und der Halteteile zusammen definiert weitgehend den Abstand, den die Sperrvorrichtung überbrücken kann. Soll ein größerer Abstand gegen den Zutritt von Tieren geschützt werden, können entweder die Halteteile oder die Sperrelemente oder beide verlängert werden. Nach einer vorteilhaften Weiterbildung der Erfindung hat die Stabilisierungseinrichtung eine Mehrzahl an Aufnahmeöffnungen für darin gehalterte weitere Sperrelemente. Sie sind vorteilhaft stift- oder stabförmig ausgebildet und in derselben Richtung orientiert wie die Sperrelemente. Sie stehen im Montagezustand in einer der Befestigungsseite der Sperrvorrichtung gegenüberliegenden Seite der Stabilisierungseinrichtung ab. Sie setzen damit die Wirkung der Sperrelemente jenseits der Stabilisierungseinrichtung fort.

Wie die Sperrelemente so können auch die weiteren Sperrelemente an der Stabilisierungseinrichtung jeweils einzeln verschiebbar angebracht sein. Dadurch kann sich die Sperrvorrichtung der jeweils vorliegenden Oberfläche, der gegenüber sie eine Sperrwirkung entfalten soll, problemlos anpassen.

Jedes weitere Sperrelement ist mindestens zweimal an der Stabilisierungseinrichtung gehaltert, damit es zuverlässig in seiner beabsichtigten Lage verbleibt und keine zu großen Abstände zu benachbarten Sperrelementen entstehen.

Eine zuverlässige Sperrwirkung lässt sich erreichen, wenn die Sperrelemente und die weiteren Sperrelemente in einer Längserstreckungsrichtung der Sperrvorrichtung betrachtet abwechselnd nebeneinander an der Stabilisierungseinrichtung gehaltert sind.

Grundsätzlich können die Sperrelemente einerseits und die weiteren Sperrelemente andererseits einen ähnlichen Aufbau haben. Um zuverlässig an der Stabilisierungseinrichtung gehalten zu sein, kann daher auch ein weiteres Sperrelement an wenigstens einem freien Ende einen Anschlagteil haben, der nicht durch die Aufnahmeöffnung an der Stabilisierungseinrichtung hindurch passt. Ein Anschlagteil kann vorzugsweise an beiden freien Enden des weiteren Sperrelementes angebracht und in vergleichbarer Weise wie oben für die Sperrelemente beschrieben ausgebildet sein, zum Beispiel durch einen verformten Endabschnitt des weiteren Sperrelementes. Dadurch kann das weitere Sperrelement zwar verschiebbar, aber unverlierbar an der Stabilisierungseinrichtung angebracht sein.

Alle Sperrelemente haben günstiger Weise weitgehend gleiche Länge und/oder gleichen Durchmesser. Als sogenannte Gleichteile können sie die Herstellung und die Montage der Sperrvorrichtung vereinfachen. Auch die Herstellung der Stabilisierungseinrichtung vereinfacht sich dadurch, weil die Durchtrittsöffnungen für alle Sperrelemente identisch aufgebaut sein können.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus der Beschreibung und den Zeichnungen.

Die Erfindung wird nachstehend anhand zweier in den Zeichnungen dargestellter Ausführungsformen näher erläutert. Es zeigen
- Fig. 1: eine Ansicht einer ersten Ausführungsform einer erfindungsgemäßen Sperrvorrichtung mit einer Stabilisierungseinrichtung an den Sperrelementen,
- Fig. 2: in perspektivischer Darstellung die Sperrvorrichtung gemäß Fig. 1,
- Fig. 3: in vergrößerter und perspektivischer Darstellung einen Teil der erfindungsgemäßen Sperrvorrichtung gemäß den Fig. 1 und 2,
- Fig. 4: die erfindungsgemäße Sperrvorrichtung gemäß Fig. 1 bis 3 in einer perspektivischen Rückansicht,
- Fig. 5: eine Ansicht einer zweiten Ausführungsform der Sperrvorrichtung mit Sperrgliedern an der Stabilisierungseinrichtung,
- Fig. 6: in perspektivischer Darstellung die Sperrvorrichtung gemäß Fig. 5,
- Fig. 7: in vergrößerter und perspektivischer Darstellung einen Teil der Sperrvorrichtung gemäß den Fig. 5 und 6,
- Fig. 8: die Sperrvorrichtung gemäß Fig. 5 bis 7 in einer perspektivischen Rückansicht.

Die Sperrvorrichtung dient dazu, Tiere, insbesondere Vögel, vorzugsweise Tauben, daran zu hindern, sich in Zwischenräumen zwischen beispielsweise Solar- oder Photovoltaikmodulen und dem Dach niederzulassen und/oder in diesen Zwischenräumen zu nisten. Auch der Zutritt von beispielsweise Mardern in solche Zwischenräume kann mit Hilfe der Sperrvorrichtung verhindert werden.

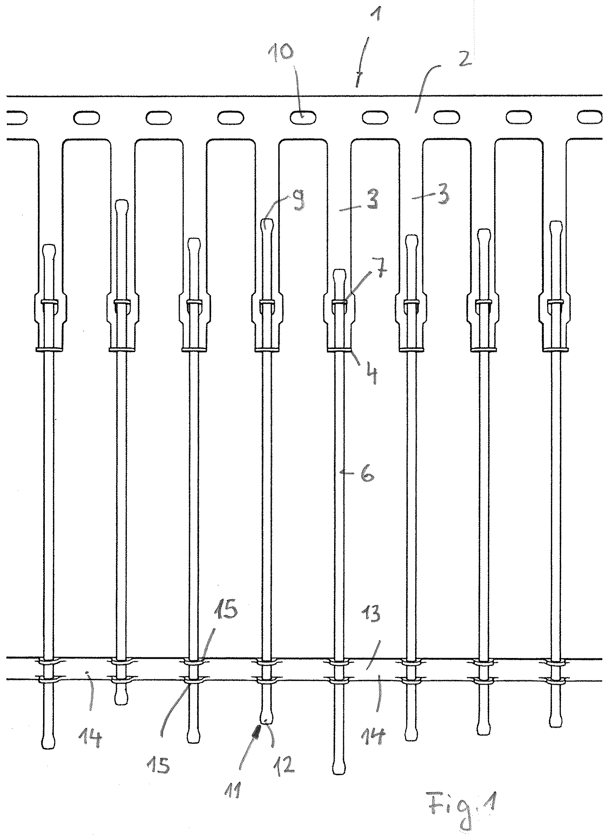

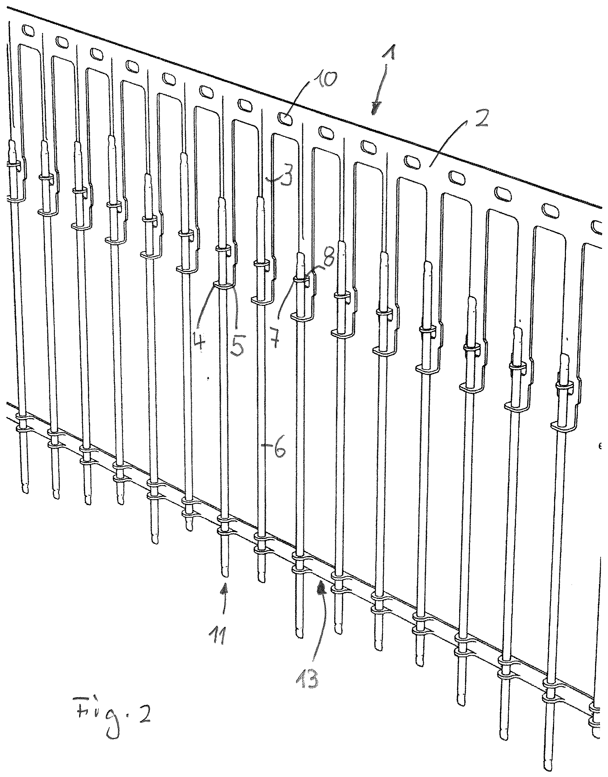

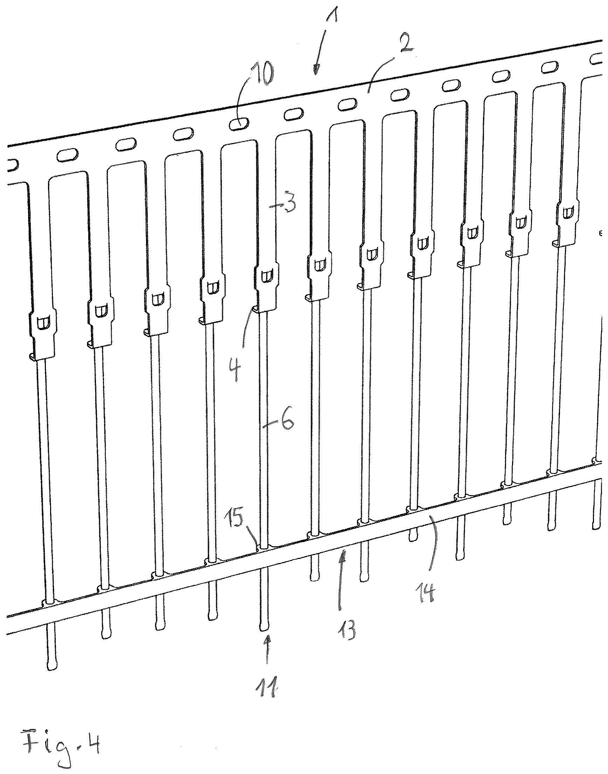

Die erste Ausführungsform der Sperrvorrichtung gemäß den Fig. 1 bis 4 hat einen Träger 1, der vorteilhaft aus Metall besteht und beispielsweise durch einen Stanzvorgang aus einem Band, einer Platte und dgl. hergestellt werden kann. Der Träger 1 hat nur eine geringe Dicke, so dass er in der Einbaulage nur wenig Einbauraum benötigt.

Der Träger 1 hat einen band- oder leistenförmigen Befestigungsteil 2, von dem schmale leistenförmige Halteteile 3 quer, vorzugsweise senkrecht abstehen. Die Halteteile 3 sind einstückig mit dem Befestigungsteil 2 ausgebildet und liegen mit diesem in einer gemeinsamen Ebene.

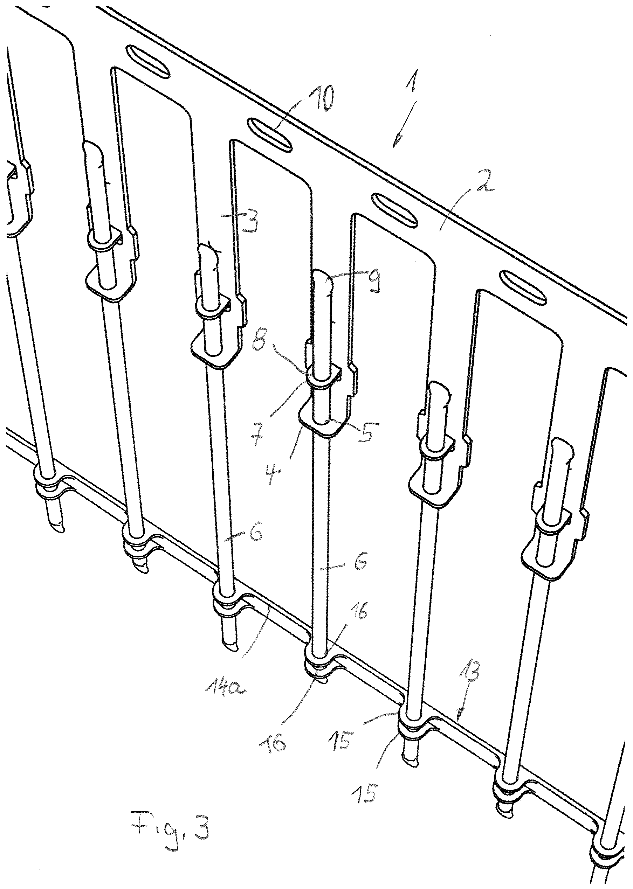

Die Halteteile 3 liegen mit Abstand längs des Befestigungsteiles 2 hintereinander, vorzugsweise mit gleichem Abstand. Die Halteteile 3 sind in vorteilhafter Weise gleich ausgebildet. Das freie Ende 4 der Halteteile 3 ist rechtwinklig abgebogen und mit einer Durchtrittsöffnung 5 für ein Sperrelement 6 versehen (Fig. 3).

Das Sperrelement 6 ist in bevorzugter Ausführung stiftförmig ausgebildet. Es kann aus einer nicht dargestellten Ausgangs- bzw. Ruhelage in eine Sperrlage gemäß Fig. 1 bis 4 verschoben werden. Der Durchmesser der Durchtrittsöffnung 5 entspricht dem Außendurchmesser des Sperrelementes 6, das dadurch bei seiner Verschiebebewegung zuverlässig geführt wird.

Mit Abstand oberhalb des abgewinkelten freien Endes 4 ist aus dem Halteteil 3 eine Zunge 7 herausgebogen, die ebenfalls mit einer Durchtrittsöffnung 8 (Fig. 3), für das Sperrelement 6 versehen ist. Der Durchmesser der Durchtrittsöffnung 8 entspricht ebenfalls dem Außendurchmesser des Sperrelementes 6. Durch das freie Ende 4 und die Zunge 7 ist das Sperrelement 6 bei seiner Verschiebebewegung einwandfrei geführt. Das freie Ende 4 und die Zunge 7 liegen mit Abstand übereinander, was zur einwandfreien Führung bei der Verschiebebewegung des Sperrelementes 6 vorteilhaft beiträgt.

Die Zunge 7 ist aus dem Halteteil 3 rechtwinklig herausgebogen. Hierzu wird in die Halteteile 3 ein entsprechender Schnitt eingebracht, damit anschließend die Zunge 7 aus dem Halteteil 3 rechtwinklig herausgebogen werden kann.

Die Sperrelemente 6 sind am oberen Ende mit einer Verdickung 9, vorzugsweise einem verformten Abschnitt versehen. Durch den verformten Endabschnitt 9 ist das Sperrelement 6 an diesem Ende in einer Richtung verbreitert ausgebildet, so dass das Sperrelement 6 nicht durch die Durchtrittsöffnung 8 der Zunge 7 hindurchrutschen kann. Spätestens dann, wenn der Endabschnitt 9 auf der Zunge 7 aufliegt, kann das Sperrelement 6 nicht mehr weiter nach unten verschoben werden.

Der Endabschnitt 9 lässt sich in einfacher Weise durch plastisches Verformen erreichen, so dass keine aufwändigen Fertigungsmaßnahmen erforderlich sind.

Der band- bzw. leistenförmige Befestigungsteil 2 ist mit Öffnungen 10 versehen, durch welche Befestigungsmittel gesteckt werden können, um den Befestigungsteil 2 an einer Befestigungsfläche eines Solar- oder Photovoltaikmoduls zu befestigen. Die Öffnungen 10 sind in vorteilhafter Weise mittig zwischen benachbarten Sperrelementen 6 im Befestigungsteil 2 vorgesehen. Der Befestigungsteil 2 kann auch auf jede andere geeignete Weise montiert werden, beispielsweise angeklebt, angenagelt, angeschraubt und dgl.

Beim Einbau der Sperrvorrichtung werden die Sperrelemente 6 je nach Gestaltung des zu sperrenden Zwischenraumes mehr oder weniger weit verschoben. Die Sperrelemente 6 können stufenlos so weit verstellt werden, bis sie auf dem jeweiligen Untergrund aufliegen. Dadurch lässt sich der zu sichernde Zwischenraum einwandfrei verschließen. Die Sperrelemente 6 können so an der Sperrvorrichtung vorgesehen sein, dass sie nicht von alleine nach unten rutschen, sondern jeweils von Hand in die entsprechende Position längs der Halteteile 3 verschoben werden müssen. Vorteilhaft ist es, wenn die Sperrelemente 6 allein nach unten rutschen, was die Montage der Sperrvorrichtung 6 vereinfacht.

An ihrem vom Halteteil 3 abgewandten freien Ende 11 weisen die Sperrelemente 6 verformte Endabschnitte 12 auf. Sie sind in gleicher Weise ausgebildet wie die gegenüberliegenden verformten Endabschnitte 9 der Sperrelemente 6 im Bereich der Halteteile 3.

Zwischen den verformten Endabschnitte 12 und den Laschen 4 der Halteteile 3 lässt sich eine Stabilisierungseinrichtung 13 auf den Sperrelementen 6 frei verschieben. Die Stabilisierungseinrichtung 13 kann auch so an der Sperrelementen 6 gelagert sein, dass sie nicht von alleine auf ihnen von den Halteteilen 3 weg nach unten rutscht, sondern von Hand in die entsprechende Position längs der Sperrelemente 6 verschoben werden muss.

Die Stabilisierungseinrichtung 13 hat einen band- oder leistenförmigen Verbindungsteil 14, von dem abgerundete Laschen 15 senkrecht abstehen. Die Laschen 15 liegen beidseits an den Längsrändern des Verbindungsteiles 14 und jeweils einander paarweise gegenüber. Sie weisen Durchtrittsöffnungen 16 auf (Fig. 3), die miteinander fluchten und gleichen Durchmesser haben wie die Durchtrittsöffnungen 5, 8 der Laschen 4 und der Zungen 7.

Die Laschen 15 sind vorteilhaft einstückig mit dem Verbindungsteil 14 ausgebildet. Die Stabilisierungseinrichtung 13 besteht vorteilhaft aus Metall und kann beispielsweise durch einen Stanzvorgang zusammen mit den Laschen 15 aus einem Band, einer Platte und dgl. hergestellt werden. Die Laschen 15 werden anschließend um 90° gegenüber dem Verbindungsteil 14 in die Einbaulage gebogen, ggf. zusammen mit einem schmalen, sie verbindenden und längsverlaufenden Steg 14a (Fig.3), der der Stabilisierungseinrichtung 13 zusätzliche Biegesteifigkeit verleihen kann. Die Stabilisierungseinrichtung 13 hat nur eine geringe Dicke, so dass sie geringes Gewicht hat.

Die Stabilisierungseinrichtung 13 hält eine beliebige Anzahl nebeneinander liegender Sperrelemente 6 mit vorzugsweise gleichem Abstand zueinander, verläuft grundsätzlich parallel zum Befestigungsteil 2 und liegt mit ihm in derselben Ebene. Wegen der verformten Endabschnitte 12 kann die Stabilisierungseinrichtung 13 nicht von den Sperrelementen 6 an deren freien Enden 11 abrutschen. Sie ist damit unverlierbar an der Sperrvorrichtung gehalten.

Wenn die Stabilisierungseinrichtung 13 frei verschiebbar auf den Sperrelementen 6 gelagert ist, rutscht sie im Montagezustand der Sperrvorrichtung von sich aus in Richtung der freien Enden 11 nach unten. Anderenfalls lässt sie sich von Hand in die tiefste abgesenkte Position verschieben. Die Fig. 1 bis 4 zeigen die tiefste abgesenkte Position der Stabilisierungseinrichtung 13. Sie wird bestimmt durch dasjenige Sperrelement 6, das sich am wenigsten weit vom Halteteil 3 weg absenken lässt, in Fig.1 beispielsweise ist es das zweite Sperrelement 6 von links.

In der am tiefsten abgesenkte Position der Stabilisierungseinrichtung 13 kann sie ihre maximale Stabilisierungswirkung erzielen, nämlich die Sperrelemente 6 gegen Verbiegen zu schützen, indem sie sich an den benachbarten Sperrelementen 6 abstützt. Jedes Sperrelement 6 erhält also zusätzlich zu seiner Halterung im Halteelement 3 an seinem ersten, in Fig. 1 bis 4 oberen freien Ende eine zweite Halterung durch die Stabilisierungseinrichtung 13 am gegenüberliegenden anderen freien Ende 11. Jedes Sperrelement 6 ist damit an zwei voneinander beabstandeten Orten festgehalten und damit besonders stabil gehaltert.

Die Stabilisierungseinrichtung 13 hält die Sperrelemente 6 in demselben Abstand zueinander wie die Halteelemente 3 und das Befestigungsteil 2. Es sichert den Abstand der Sperrelemente 6 zueinander, so dass er auch durch auf einzelne Sperrelemente 6 einwirkenden Kräfte nicht verändert werden kann. Denn eine Belastung eines einzelnen Sperrelements 6, die ohne Stabilisierungseinrichtung 13 zu einem Verbiegen und dadurch zu einer Vergrößerung des Abstandes zum benachbarten Sperrelement 6 führen würde, verteilt die Stabilisierungseinrichtung 13 nun auf mehrere Sperrelemente 6 und hält den notwendigen Abstand zwischen den Sperrelementen 6 ein. Damit wird die Sperrwirkung der Sperrvorrichtung 1 auch unter Belastung einzelner Sperrelemente 6, wie beispielsweise Schnee- oder Eisdruck, zuverlässig aufrecht erhalten.

Der Träger 1 mit dem Befestigungsteil 2, den Halteteilen 3 und die Stabilisierungseinrichtung 13 können auch aus einem anderen Material bestehen, beispielsweise aus einem Kunststoff, wie etwa Polycarbonat.

Die Sperrvorrichtung kann dort eingesetzt werden, wo der Zutritt von Tieren, wie Vögeln, insbesondere Tauben, in einen Zwischenraum verhindert werden soll, der durch mit Abstand übereinander liegender Elemente gebildet wird.

Der Abstand zwischen den Sperrelementen 6 bestimmt sich danach, welche Art von Tieren am Zutritt in den Zwischenraum gehindert werden soll. Die Sperrvorrichtung benötigt infolge der beschriebenen Ausbildung nur einen kleinen Einbauraum und kann insbesondere sehr kostengünstig gefertigt werden. Die zur Führung der Sperrelemente 6 vorgesehenen Zungen 4, 7 sind einstückig mit dem Halteteil 3 ausgebildet und verleihen ihm trotz seiner geringen Dicke eine ausreichend hohe Festigkeit. Insbesondere sind zur Führung der Sperrelemente 6 keine zusätzlichen Führungsteile notwendig, die gesondert an den Halteteilen 3 befestigt werden müssten.

Wenn der Träger 1 bei der bevorzugten Ausbildung als Metallteil gestanzt worden ist, dann können in dem Stanzteil bereits die Durchtrittsöffnungen 5, 8 und 10 und Schnitte zur Ausbildung der Zungen 7 gestanzt werden, so dass nach dem Stanzvorgang lediglich noch erforderliche Biegeprozesse zur Bildung der Laschen 4 und der Zungen 7 durchgeführt werden müssen. Vergleichbar einfach gestaltet sich die Herstellung der Stabilisierungseinrichtung 13.

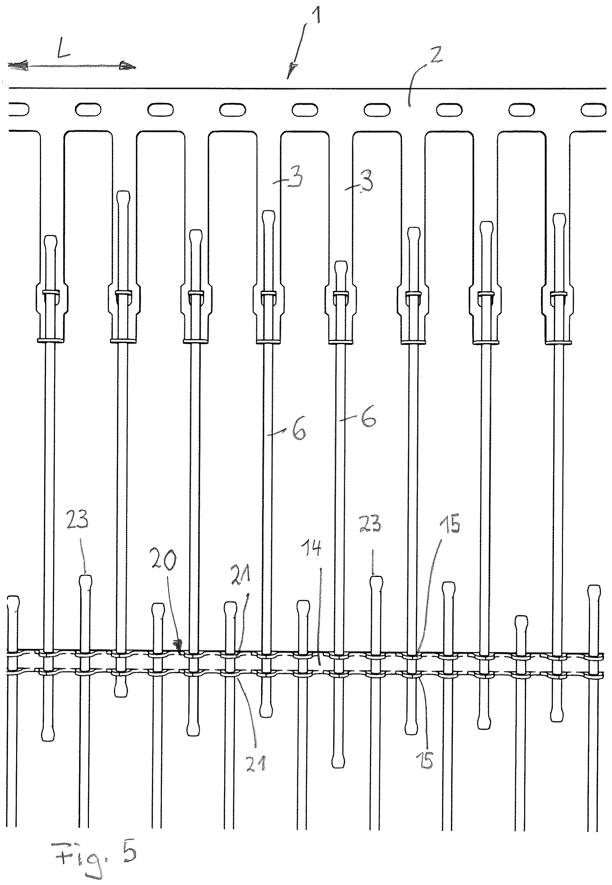

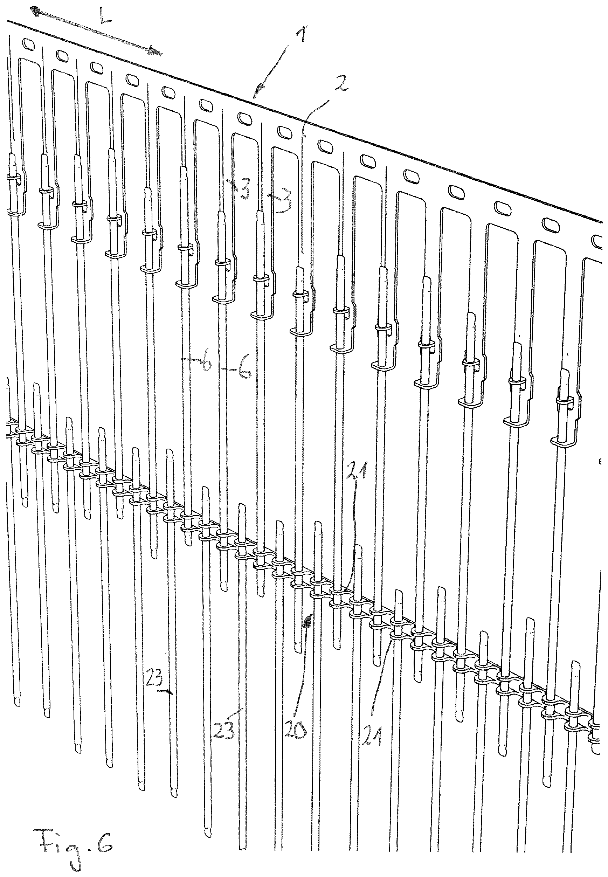

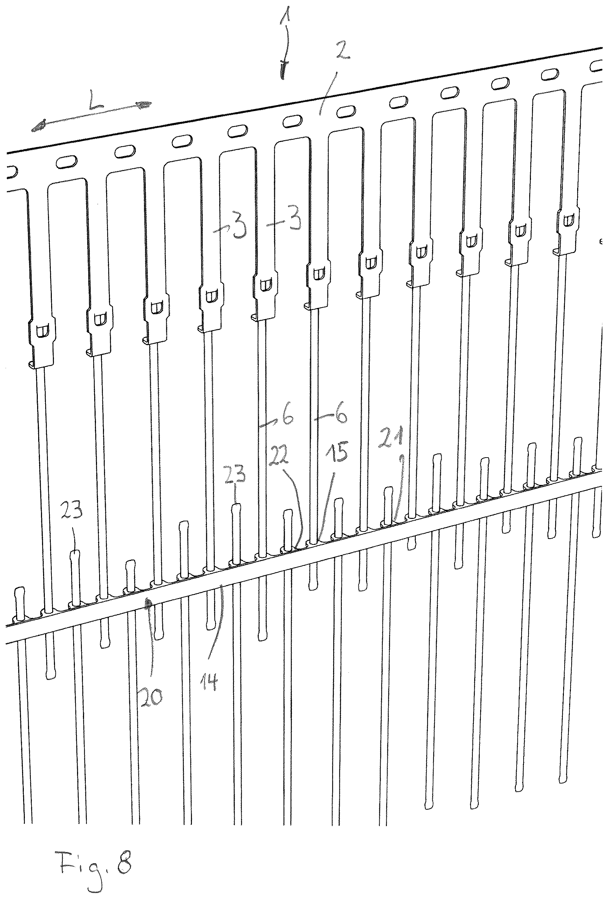

Die zweite Ausgestaltungsform der Erfindung gemäß den Fig. 5 bis 8 hat mit dem Träger 1, dem Befestigungsteil 2, den Halteteilen 3 und den Sperrelementen 6 die identischen Teile wie die erste Ausgestaltungsform der Fig. 1 bis 4. Sie kann jedoch einen größeren Zwischenraum zwischen Photovoltaikmodulen und einem Dach versperren als die erste Ausgestaltungsform. Die zweite Ausgestaltungsform hat eine Stabilisierungseinrichtung 20, die prinzipiell vergleichbar aufgebaut ist und sich herstellen lässt wie die Stabilisierungseinrichtung 13. Auch die Stabilisierungseinrichtung 20 hat einen band- oder leistenförmigen Verbindungsteil 14, von dem die abgerundete Laschen 15 senkrecht abstehen und jeweils einander paarweise gegenüberliegen. In ihren Durchtrittsöffnungen 16, die miteinander fluchten und gleichen Durchmesser haben, stecken die Sperrelemente 6.

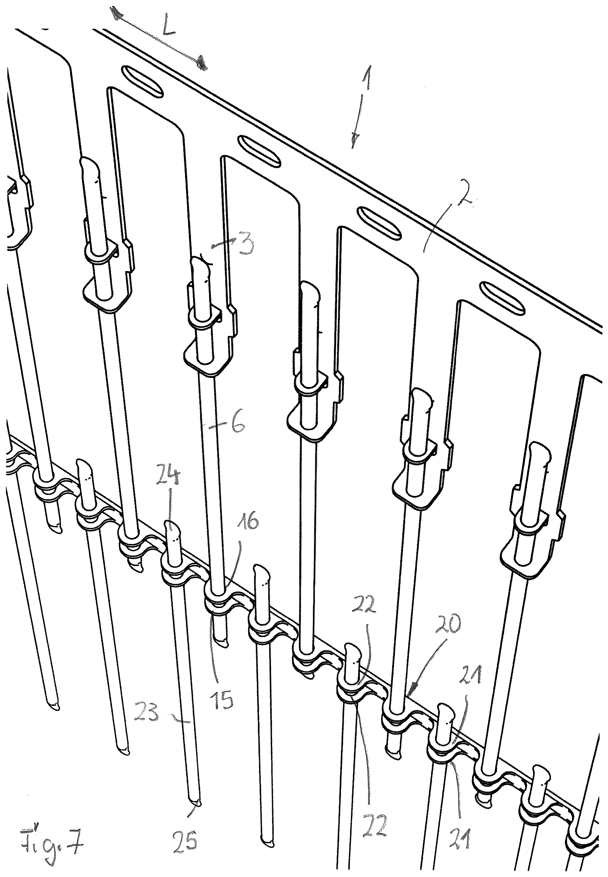

Abweichend von der Stabilisierungseinrichtung 13 hat die Stabilisierungseinrichtung 20 in Längsrichtung L der Sperrvorrichtung betrachtet zwischen jeder Lasche 15 eine gleichartig hergestellte und aufgebaute Lasche 21 mit einer Aufnahmeöffnung 22 (Fig. 7). In der Längsrichtung L wechseln sich die Laschen 15 und die Laschen 21 mit demselben Abstand untereinander ab. Auch die Laschen 21 liegen an den Längsrändern des Verbindungsteiles 14 paarweise einander gegenüber. Ihre Aufnahmeöffnungen 22 haben denselben Durchmesser und fluchten miteinander.

Die Laschen 21 nehmen Sperrelemente 23 verschiebbar auf. Jedes Sperrelement 23 ist in bevorzugter Ausführung stiftförmig ausgebildet wie das Sperrelement 6 und vorteilhaft etwa genauso lang. Der Durchmesser der Aufnahmeöffnung 22 entspricht dem Außendurchmesser des Sperrelementes 23, das dadurch bei seiner Verschiebebewegung in den Laschen 21 zuverlässig geführt ist. Es kann schwerkraftgetrieben oder von Hand aus einer nicht dargestellten, hochgeschobenen Ausgangs- bzw. Ruhelage in eine abgesenkte Sperrlage gemäß Fig. 5 bis 8 verschoben werden.

Wie die Sperrelemente 6 haben auch die Sperrelemente 23 vorteilhaft verformte Endabschnitte 24, 25 (Fig. 7) an ihren Enden, die ein Durchrutschen der Sperrelemente 23 durch die Aufnahmeöffnungen 22 verhindern. Die Sperrelemente 23 sind somit in vorteilhafter Weise identisch wie die Sperrelemente 6 aufgebaut, womit sie als Gleichteile ihre Herstellung und die Montage der Sperrvorrichtung vereinfachen.

Die Stabilisierungseinrichtung 20 hält die Sperrelemente 6 einerseits und die Sperrelemente 23 andererseits in demselben Abstand zueinander, wie er zwischen den Halteteilen 3 besteht. Der Abstand zwischen den Sperrelementen 6 und 23 ist halb so groß wie der Abstand zwischen den Sperrelementen 6 bzw. 23.

Bei gleichlangen Sperrelementen 6 und Sperrgliedern 23 kann die Sperrvorrichtung der Fig. 5 bis 8 etwa doppelt so große Zwischenräume versperren wie die Ausgestaltungsform gemäß Fig. 1 bis 4. Die Sperrelemente 6 einerseits und die Sperrelemente 23 andererseits können aber auch ungleiche Länge haben. Die Sperrvorrichtung lässt sich damit gut an unterschiedliche Einbausituationen anpassen.

## Patentansprüche

1. Sperrvorrichtung zur Abwehr von Tieren, vorzugsweise Vögeln, insbesondere Tauben, mit einer Mehrzahl an parallel in einer Reihe nebeneinander angeordneten Halteteilen (3, 14) für Sperrelemente (6, 23), die relativ zum jeweiligen Halteteil (3) verstellbar sind,
**dadurch gekennzeichnet, dass** an wenigstens zwei Sperrelementen (6, 23) eine quer dazu verlaufende Stabilisierungseinrichtung (13, 20) vorgesehen ist, die die Sperrelemente (6, 23) miteinander verbindet und verschiebbar an den Sperrelementen (6, 23) angebracht ist.

2. Sperrvorrichtung nach Anspruch 1,
**dadurch gekennzeichnet, dass** die Sperrelemente (6, 23) die Stabilisierungseinrichtung (13, 20) an Durchtrittsöffnungen (16, 21) durchdringen.

3. Sperrvorrichtung nach Anspruch 2,
**dadurch gekennzeichnet, dass** jedes Sperrelement (6, 23) die Stabilisierungseinrichtung (13, 20) mindestens zweimal durchdringt.

4. Sperrvorrichtung nach Anspruch 3,
**dadurch gekennzeichnet, dass** die Stabilisierungseinrichtung (13, 20) einen u-förmigen Querschnitt und zwei U-Schenkel hat, die für jedes Sperrelement (6, 23) zwei einander gegenüberliegende Durchtrittsöffnungen (16, 21) haben.

5. Sperrvorrichtung nach einem der Ansprüche 1 bis 4,
**dadurch gekennzeichnet, dass** die Stabilisierungseinrichtung (13, 20) einen band- oder leistenförmigen Verbindungsteil (14) aufweist, von dem zungenförmige Laschen (15) mit Durchtrittsöffnungen (16, 22) quer abstehen.

6. Sperrvorrichtung nach einem der Ansprüche 1 bis 5,
**dadurch gekennzeichnet, dass** wenigstens ein Sperrelement (6) an seinem vom Halteteil (3) abgewandten freien Ende (11) einen Anschlagteil (12) hat, der nicht durch die Durchtrittsöffnungen (16, 22) hindurchpasst.

7. Sperrvorrichtung nach Anspruch 6,
**dadurch gekennzeichnet, dass** der Anschlagteil (12) durch einen verformten Endabschnitt (11) des Sperrelementes (6) gebildet ist.

8. Sperrvorrichtung nach einem der Ansprüche 1 bis 7,
**dadurch gekennzeichnet, dass** die Stabilisierungseinrichtung (20) Durchtrittsöffnungen (22) für weitere Sperrelemente (23) hat.

9. Sperrvorrichtung nach Anspruch 8,
**dadurch gekennzeichnet, dass** die weiteren Sperrelemente (23) an der Stabilisierungseinrichtung (20) verschiebbar angebracht sind.

10. Sperrvorrichtung nach einem der Ansprüche 1 bis 9,
**dadurch gekennzeichnet, dass** jedes weitere Sperrelement (23) mindestens zweimal an der Stabilisierungseinrichtung (20) gehaltert ist.

11. Sperrvorrichtung nach einem der Ansprüche 1 bis 10,
**dadurch gekennzeichnet, dass** die Sperrelemente (6) und die weiteren Sperrelemente (23), in einer Längserstreckungsrichtung (L) der Sperrvorrichtung betrachtet, abwechselnd nebeneinander an der Stabilisierungseinrichtung (20) gehaltert sind.

12. Sperrvorrichtung nach einem der Ansprüche 1 bis 11,
**dadurch gekennzeichnet, dass** wenigstens ein weiteres Sperrelement (23) an wenigstens einem freien Ende einen Anschlagteil (24, 25) hat, der nicht durch die Durchtrittsöffnung (22) hindurch passt.

13. Sperrvorrichtung nach Anspruch 12,
**dadurch gekennzeichnet, dass** der Anschlagteil (24, 25) durch einen verformten Endabschnitt des weiteren Sperrelementes (23) gebildet ist.

14. Sperrvorrichtung nach einem der Ansprüche 1 bis 13,
**dadurch gekennzeichnet, dass** die Sperrelemente (6, 23) weitgehend gleiche Länge haben.

15. Sperrvorrichtung nach einem der Ansprüche 1 bis 14,
**dadurch gekennzeichnet, dass** der Verbindungsteil (14) der Stabilisierungseinrichtung (20) den Halteteil für die weiteren Sperrelemente (23) bildet.
